# EUROPÄISCHE PATENTSCHRIFT

(11) **EP 1 886 040 B1**
(45) Veröffentlichungstag und Bekanntmachung des Hinweises auf die Patenterteilung: **24.03.2010**
(21) Anmeldenummer: 06753889.2
(22) Anmeldetag: 26.05.2006
(51) Int. Cl.: F16D 37/02

(54) **MAGNETORHEOLOGISCHE KUPPLUNG MIT TOPFLAMELLEN**
MAGNETORHEOLOGICAL CLUTCH WITH POT-TYPE DISCS
EMBRAYAGE MAGNETORHEOLOGIQUE A LAMELLES EN CREUSET

(30) Priorität: 31.05.2005 AT 35805 U
(43) Veröffentlichungstag der Anmeldung: 13.02.2008
(60) Teilanmeldung: 09014839.6
(73) Patentinhaber: Magna Powertrain AG & Co. KG, 8502 Lannach (AT)
(72) Erfinder: STEINWENDER, Herbert, A-8074 Raaba (AT); SCHOBER, Gerald, 8302 Langegg bei Graz (AT)
(74) Vertreter: Manitz, Finsterwald & Partner GbR
(86) Internationale Anmeldenummer: PCT/EP2006/005026
(87) Internationale Veröffentlichungsnummer: WO 2006/128636

(56) Entgegenhaltungen:
- EP-A- 0 940 286
- GB-A- 772 457
- US-A1- 2003 111 312
- US-A1- 2003 226 731

## Beschreibung

Die Erfindung betrifft eine magnetorheologische Kupplung, bestehend aus einem Stationärteil, einem rotierenden Primärteil mit Primärlamellen und einem koaxial rotierenden Sekundärteil mit Sekundärlamellen wobei zwischen Primär- und Sekundärteil ein magnetorheologisches Fluid enthaltender Arbeitsraum gebildet ist, in dem sich Primärlamellen und Sekundärlamellen in Radialrichtung aufeinanderfolgend abwechseln, und wobei auf das magnetorheologische Fluid ein regelbares Magnetfeld einwirkt. Das magnetorheologische Fluid kann entweder eine Flüssigkeit oder ein Gas mit darin suspendierten magnetisierbaren Partikeln sein.

Für die Verwendung einer gattungsgemäßen Kupplung im Antriebsstrang eines Kraftfahrzeuges sind Stromverbrauch und Baugröße kritisch und daher zu minimieren. Dazu kommen noch weitere Anforderungen: Ein breiter Regelbereich des übertragenen Momentes, sowie schnelles und präzises Ansprechen, um allen fahrdynamischen Anforderungen zu genügen.

Eine gattungsgemäße Kupplung ist aus der EP 940 286 A2 bekannt. Bei dieser wird das Magnetfeld von einer gehäusefesten Spule erzeugt. Durch die Bauweise der Magnetspule mit ihrem Joch sind die Feldlinien relativ lang, was den aktiven Teil des Magnetfeldes, das ist dessen auf das magnetorheologische Fluid einwirkender Teil, verkleinert. Dadurch auch besteht zwischen deren Joch und den rotierenden Teilen, insbesondere den Lamellen ein Luftspalt, der aus Toleranzgründen eine erhebliche Breite aufweisen muss. Dadurch sind die magnetischen Feldlinien unterbrochen und das auf das magnetorheologische Fluid einwirkende Magnetfeld ist weiter geschwächt. Die zylindrischen Lamellen bergen weitere Probleme: Die suspendierten Partikel wandern von der Fliehkraft getrieben, in Schlangenlinien kaskadenartig zwischen den einzelnen zylindrischen Lamellen, langsam nach aussen, das Fluid entmischt sich; die Lamellen verhindern eine rasche Zirkulation des Fluides, die es wieder durchmischen würde. Dieses Problem ist auch in der US 6,318,531 angesprochen, die eine ebenfalls gattungsgemäße magnetorheologische Kupplung zum Gegenstand hat. Ein weiteres Problem ist die Verbindung der zylindrischen Lamellen mit ihren achsnormalen Grundplatten. Sie ist äusserst arbeitsaufwändig und ein genaues Zentrieren und Einhalten der Abstände zwischen den einzelnen Lamellen ist nicht möglich.

Die der Erfindung zugrunde liegende Aufgabe besteht darin, eine gattungsgemäße Kupplung dahingehend zu verbessern, dass auf kleinstem Arbeitsraum und bei minimalem Stromverbrauch ein möglichst hohes Drehmoment übertragbar ist und dabei die genannten Probleme der Entmischung und der Anbindung der Lamellen an ihre Grundteile zu lösen.

Erfindungsgemäß wird das durch die kennzeichnenden Merkmale des ersten Anspruches erreicht. Der im Längsschnitt L-förmige Arbeitsraum (Merkmal a)) sorgt für höchste Dichte und beste Ausnutzung der magnetischen Feldlinien. Die topfförmige Gestalt der Lamellen (Merkmal c)) erlaubt eine besonders einfache Form des den Arbeitsraum umschließenden Topfes, der zugleich ein Joch bildet (Merkmal b)) und, vor allem, eine einfache Verbindung mit den sie tragenden Teilen und eine präzise Zentrierung bei genauer Einhaltung der Zwischenräume zwischen den Lamellen. Nebstbei sind die Lamellen noch billig und genau durch Tiefziehen herstellbar.

Das Problem der Entmischung ist durch das Zusammenwirken der Abdichtungen (Merkmal d)) mit der Topfform der Lamellen (Merkmal c)) und des Sekundärteiles (Merkmal b)) gelöst. Die Abdichtungen sind am zylindrischen Teil der Lamellen, dort, wo die auf die suspendierten Teilchen wirkende Fliehkraft am größten und damit ein Wandern der Teilchen in den aussen benachbarten Spalt unterbunden ist. Dank der Topfform braucht auch nur jeder zweite Zwischenraum eine Abdichtung.

Die radial zur Drehachse der Kupplung geführten Bodenteile der Lamellen erlauben eine Fluidverbindung der einzelnen Zwischenräume zwischen den Lamellen an der Stelle kleinstens Radius und minimaler Fliehkraft. Dort sind keine Abdichtungen nötig und es kann eine Fluidströmung stattfinden, die nicht zur Entmischung führt. Ausserdem erleichtert die Fluidverbindung (etwa durch die Steckverzahnung, mittels derer die Primärlamellen mit ihrem Primärteil verbunden sind) das Befüllen der Kupplung mit magnetorheologischem Fluid und den Druckausgleich zwischen den Zwischenräumen. Insgesamt ist durch die Topfform ein im Längsschnitt L-förmiger Arbeitsraum mit L-förmigen Fluidspalten zwischen den Lamellen geschaffen.

In einer bevorzugten Ausführungsform sind die Primärlamellen mit den inneren Rändern ihrer Bodenteile drehfest mit dem Primärteil verbunden und durch Abstandhalter voneinander getrennt (Anspruch 2) und sind die Sekundärlamellen an ihrer den Bodenteilen abgewandten Seite hutkrempenartig auswärts gerichtete Ränder, die in Axialrichtung aneinander anliegend mit dem Sekundärteil verbunden (Anspruch 3). Die Abstandhalter sorgen für gleiche axiale Abstände der Primärlamellen. Die Sekundärlamellen sind so zwischen Topfrand und Deckel eingeklemmt und ebenso ohne besondere Maßnahmen zentriert. Da die Verbindung für alle Lamellen auf gleichem Radius genügt zum Beispiel eine einfache Steckverzahnung.

Zur Verbesserung der Fluidverbindung zwischen den einzelnen Fluidspalten ist es von Vorteil, die Bodenteile der Primärlamellen und gegebenenfalls auch der Sekundärlamellen in der Nähe der inneren Ränder mit Durchtrittsöffnungen zu versehen (Anspruch 4), wenn die Spiele an der Steckverzahnung dazu nicht ausreichen. Das erleichtert das Befüllen und den Druckausgleich. Durch die Durchtrittsöffnungen kann keine Entmischung stattfinden, weil die Partikel dazu gegen die Fliehkraft wandern müssten, um zu ihnen zu gelangen. Zur Reduktion des magnetischen Streuflusses ist es vorteilhaft, wenn die Primärlamellen mit den inneren Rändern ihrer Bodenteile auf einem Zwischenring sitzen, der aus einem Werkstoff geringer magnetischer Permeabilität besteht und seinerseits drehfest mit dem Primärteil verbunden ist (Anspruch 5). So wird der Materialanteil der mag-netisch leitenden Lamellen reduziert.

Für die Gestaltung der Abdichtungen gibt es im Rahmen der Erfindung verschiedene Möglichkeiten. In einer vorteilhaften Ausbildung haben die den Bodenteilen abgewandten Regionen der zylindrischen Teile der Lamellen als Abdichtungen rundum verlaufende Einschnürungen, die die benachbarten Lamelle zumindest beinahe berühren (Anspruch 6). Die Einschnürungen können entweder an den Primärlamellen oder an den Sekundärlamellen angebracht sein. An den Primär-lamellen sind die Einschnürungen fertigungstechnisch günstiger (Anspruch 7). Einer Primärlamelle ist eine Sekundärlamelle benachbart und vice versa. So kommt der Dichtspalt so zu liegen, dass die Partikel wegen der Einschnürung einwärts wandern müssten, um überhaupt zum Dichtspalt zu gelangen. Nebstbei wirkt sich die Berührung der Lamellen an den Dichtspalten positiv auf den Verlauf und auf die Verteilung der magnetischen Feldlinien aus.

Eine andere vorteilhafte Ausbildung besteht darin, dass als Abdichtungen an den den Bodenteilen abgewandten Rändern der Primärlamellen Ringe aus einem gleitfreudigen Werkstoff kleiner magnetischer Permeabilität vorgesehen sind (Anspruch 8).

Hinsichtlich der Anordnung der das Magnetfeld erzeugenden und führenden Teile (Magnetspulen und Joche) gibt es im Rahmen der Erfindung verschiedene Grundformen, mit Varianten für deren Gestaltung. Diese sind Gegenstand der folgenden Unteransprüche, wobei die Anordnungen Gegenstand der Ansprüche 9, 13 und 17 und die einzelnen Gestaltungsvarianten Gegenstand der Unteransprüche 10,11,12 und 14,15,16 sind. Sie alle ergeben einen besonders dichten, geschlossenen und gleichmäßigen Verlauf der magnetischen Feldlinien.

In einer ersten Grundform weist der Primärteil einen Magnetfelderzeuger mit zumindest einem ersten Joch auf und ist von diesem umgeben, welcher Magnetfelderzeuger die innere Begrenzung des Arbeitsraumes bildet, wobei ein zweites Joch in der äusseren Begrenzung des Arbeitsraumes ausgebildet ist und der Topf des Sekundärteiles auf seiner dem Boden abgewandten Seite von einem Deckel verschlossen ist (Anspruch 9). Dadurch minimale Fliehkrafteinwirkung auf Spule und Joch. Weiters kann der Deckel zur Fxierung der Flanschteile herangezogen werden.

In einer zweiten Grundform weist der Sekundärteil zusätzlich einen den Arbeitsraum innen begrenzenden Einsatzteil auf und enthält den Magnetfelderzeuger (Anspruch 13). In einer dritten Grundform ist der Magnetfelderzeuger mit seinem ersten Joch mit einem Gehäuse fest verbunden und ein Einsatzteil und der zylindrische Teil des Topfes bilden ein zweites Joch (Anspruch 17).

Im Folgenden wird die Erfindung anhand von Abbildungen des Erfindungsgegenstandes beschrieben und erläutert. Es stellen dar:
- Fig. 1: Einen Längsschnitt durch eine erste Grundform,
- Fig. 2: Eine Variante zu Fig. 1,
- Fig. 3: Eine erste Ausführungsform zu Fig. 1,
- Fig. 4: Eine zweite Ausführungsform zu Fig. 1,
- Fig. 5: Eine dritte Ausführungsform zu Fig. 1,
- Fig. 6: Einen Querschnitt zu Fig. 5,
- Fig. 7: Detail A in Fig. 1 in drei verschiedenen Varianten (a,b,c),
- Fig. 8: Einen Längsschnitt durch eine zweite Grundform,
- Fig. 9: Einen Längsschnitt durch eine dritte Grundform.

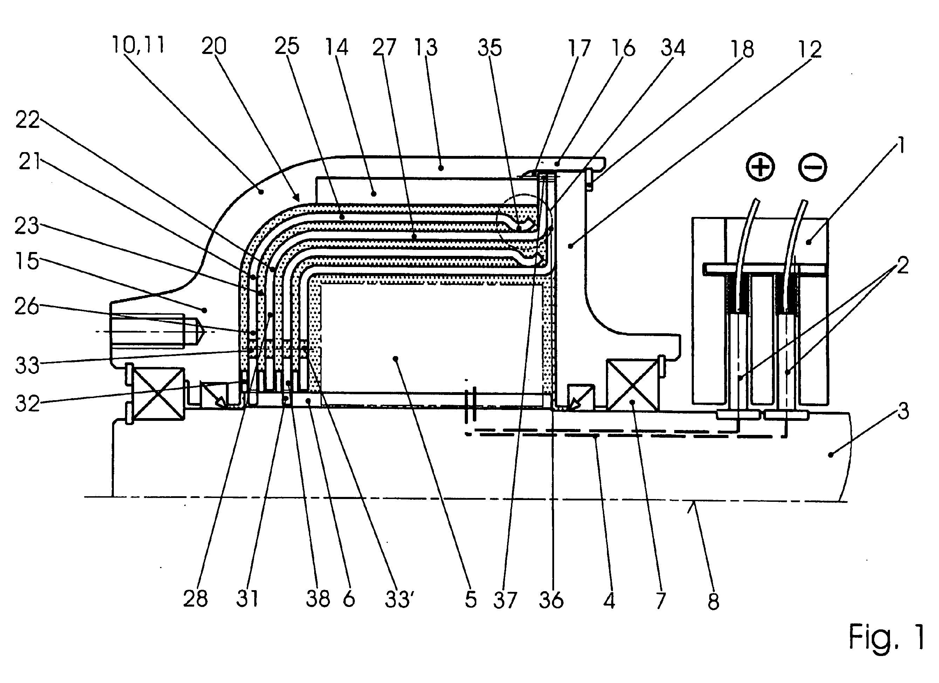

In **Fig. 1** ist von dem nicht dargestellten Gehäuse einer magnetorheologischen Kupplung nur ein Stationärteil 1 mit Schleifkontakten 2 für die Stromzufuhr zu einem Primärteil 3 dargestellt. Der Primärteil 3 ist eine Welle, die im Gehäuse gelagert ist, was nicht dargestellt ist. Der Primärteil 3 kann treiben oder angetrieben sein, was beim Einsatz in einem Kraftfahrzeug vom jeweiligen Lastzustand (Zugbetrieb oder Bremsbetrieb) abhängt. Im Primärteil 3 führt eine Stromleitung 4 von den Schleifkontakten 2 zu einem Magnetfelderzeuger 5, der im Detail weiter unten beschrieben ist. Der Primärteil 3 hat eine erste Steckverzahnung 6. Die Rotationsachse des Primärteiles und somit der ganzen Kupplung ist mit 8 bezeichnet.

Ein Sekundärteil 10 ist bezüglich des Primärteiles 3 in Lagern 7 abgestützt. Er besteht aus einem im Wesentlichen rotationssymmetrischen Topf 11 mit einem Deckel 12, der im Wesentlichen eine achsnormale Platte ist. Der Topf 11 und der Deckel 12 bilden Lagerschilde, in denen die Lager 7 sitzen. Der Topf 11 besteht hier einstückig aus einem zylindrischen Teil 13 und einem Bodenteil 15 auf der dem Deckel 12 abgewandten Seite. Der zylindrische Teil 13 hat in seinem Inneren ein rundum umlaufendes zweites Joch, das eine Schulter 16 bildet, und eine zweite Steckverzahnung 17. An dieser sitzt ein Deckel 12, gehalten beispielsweise von einem Federring 18.

Der Topf 11 und der Deckel 12 begrenzen außen und der magnetische Felderzeuger 5 begrenzt innen einen Arbeitsraum 20. Dieser ist im Längsschnitt "L"- förmig und nimmt ein Lamellenpaket auf, das aus einer Anzahl Primärlamellen 21 und Sekundärlamellen 22 besteht, zwischen denen jeweils Fluidspalte 23 frei bleiben. Diese sind Teil des Arbeitsraumes 20, der mit einem magnetorheologischen Fluid gefüllt ist. Die Primärlamellen 21 bestehen aus einem zylindrischen Teil 25 und einem im Wesentlichen achsnormalen Bodenteil 26, die mit einer Rundung ineinander übergehen. Die Rundung erleichtert die Herstellung der Lamellen durch Tiefziehen. Ebenso bestehen die Sekundärlamellen 22 aus einem zylindrischen Teil 27 und einem in einer achsnormalen Ebene liegenden Bodenteil 28. Die Primärlamellen 21 haben in ihrem Bodenteil 26 an ihrem Inneren den Primärteil 3 umgebenden Rand 38 ein Profil 31, mit dem sie auf der ersten Steckverzahnung 6 drehfest sitzen, von benachbarten Lamellen durch Abstandshalter 32 getrennt.

Zwischen dem Profil 31 und der Steckverzahnung 6 kann ein nicht dargestellter radialer Abstand bestehen, der den Durchtritt von Fluid gestattet. Mit der Dicke der Abstandhalter 32 und der Zentrierung durch die Steckverzahnung 6 können die Primärlamellen 21 ganz einfach sehr genau montiert werden. Wenn das Spiel in der ersten Steckverzahnung 6 nicht ausreicht, sind Durchtrittsöffnungen 33 zur Verbindung der einzelnen Fluidspalte in möglichst geringem Abstand von der Drehachse 8 vorgesehen. Auf der den Bodenteilen 26, 28 der Lamellen 21, 22 abgewandten Seite ist eine Abdichtung 34 vorgesehen, hier den Rand des zylindrischen Teiles 25 der Primärlamellen 21 bildend. Die Abdichtung 34 besteht hier aus einer rundum verlaufenden Einschnürung 35 der Primärlamellen 21 die deren Rand bildet.

Die Sekundärlamellen 22 reichen mit dem inneren Rand 38 ihrer Bodenteile 28 bis an die erste Steckverzahnung 6 heran, ohne diese jedoch zu berühren. So kann auch dort Fluid durchtreten. Es können auch zusätzliche Durchtrittsöffnungen 33' auf gleichem Radius wie die Durchtrittsöffnungen 33 der Primärlamellen 21 vorgesehen sein. An ihrer den Bodenteilen 28 abgewandten Seite haben sie als äußeren Rand einen in einer achsnormalen Ebene liegenden Flanschteil 36, der gewissermaßen die Krempe eines Hutes bildet. An seinem äußeren Rand hat dieser Flanschteil 36 rundum Zähne 37, die in die zweite Steckverzahnung 17 im Sekundärteil 10 eingreifen und so eine drehfeste und zentrierte Verbindung herstellen. Die Flanschteile 36 der Sekundärlamellen 22 liegen in Axialrichtung aneinader an und werden zwischen dem zweiten Joch 14 und dem Deckel 12 zusammengespannt. Dadurch und durch ihre Zentrierung in der zweiten Steckverzahnung 17 ist deren Position bezüglich der Primärlamellen 21 genau festlegbar.

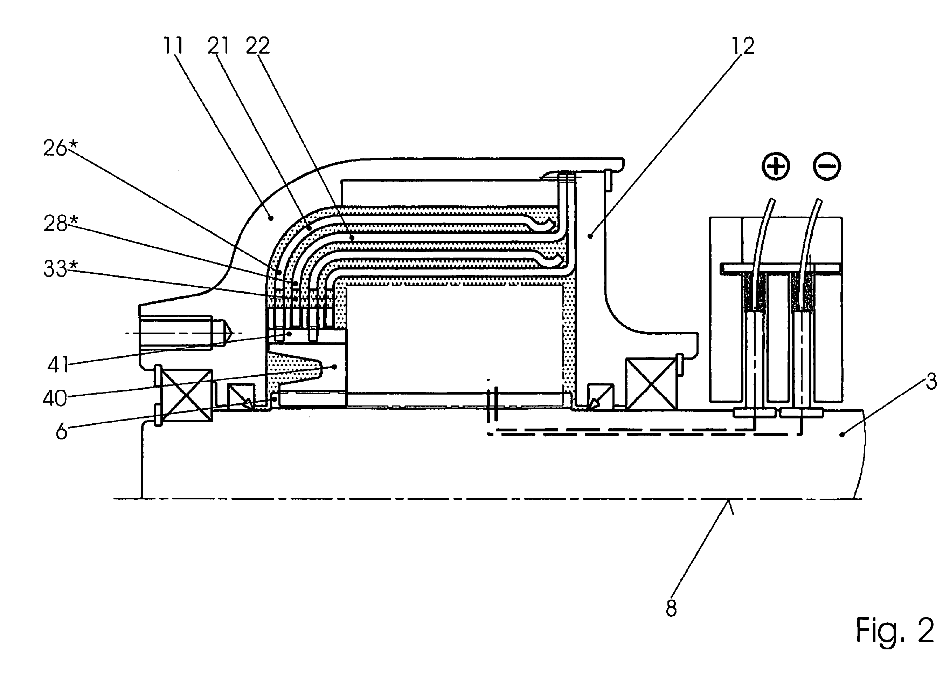

Die Variante der **Fig. 2** unterscheidet sich davon nur dadurch, dass die Bodenteile 26*, 28* der Lamellen nicht bis an die den Primärteil 3 bildende Welle heranreichen, sondern nur bis zu einem Zwischenring 40, der an seinem äußeren Umfang eine dritte Steckverzahnung 41 für die Aufnahme der Primärlamellen 21 hat und seinerseits mit seinem inneren Rand auf der ersten Steckverzahnung 6 des Primärteiles 3 sitzt. Dadurch reicht der Arbeitstraum 20 nicht ganz bis zum Primärteil 3, jedoch muss die dritte Steckverzahnung 41 bezüglich der Drehachse 8 auf einem kleineren Radius liegen als der zylindrischen Teil der innersten Lamelle. Der Zwischenteil besteht aus einem Werkstoff geringer magnetischer Permeabilität und hat den Zweck, den Materialanteil der magnetisch leitenden Lamellen zu reduzieren. Auf diese Weise kann der magnetische Streufluss in den Lamellen reduziert werden.

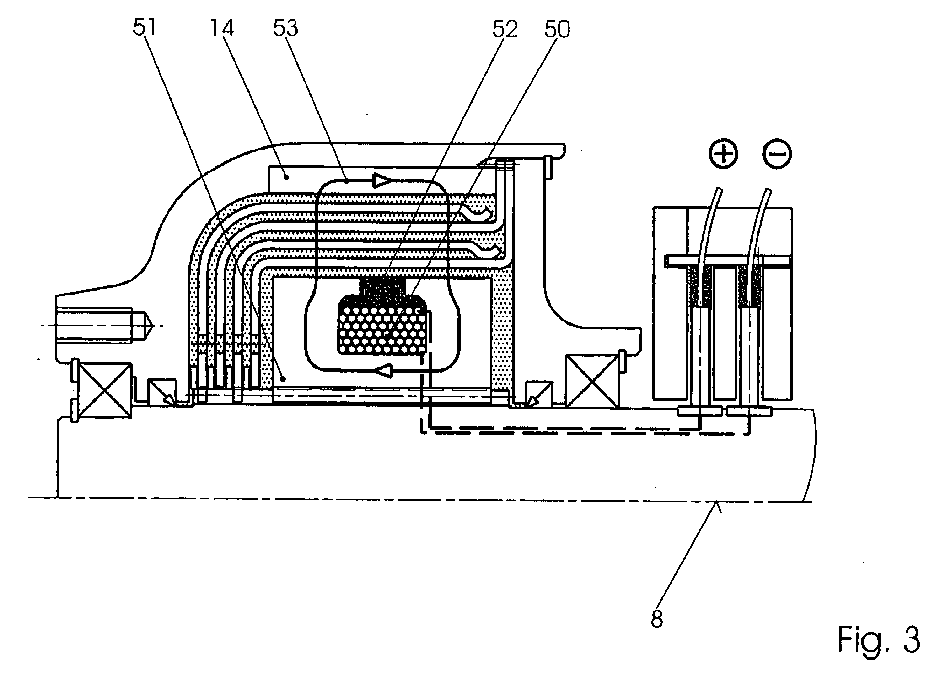

In Fig. 1 war der Magnetfelderzeuger 5 nur durch ein strichliertes Rechteck angedeutet. In **Fig. 3** besteht er aus einer Magnetspule 56, deren Wickelachse die Drehachse 8 ist, und aus einem diese umhüllenden ersten Joch 51, das lediglich radial außerhalb der Spule 50 rundum eine Zone 52 kleiner magnetischer Permeabilität hat, um kurzgeschlossene Feldlinien zu verhindern. Das so geschaffene Magnetfeld ist durch eine Feldlinie 53 charakterisiert.

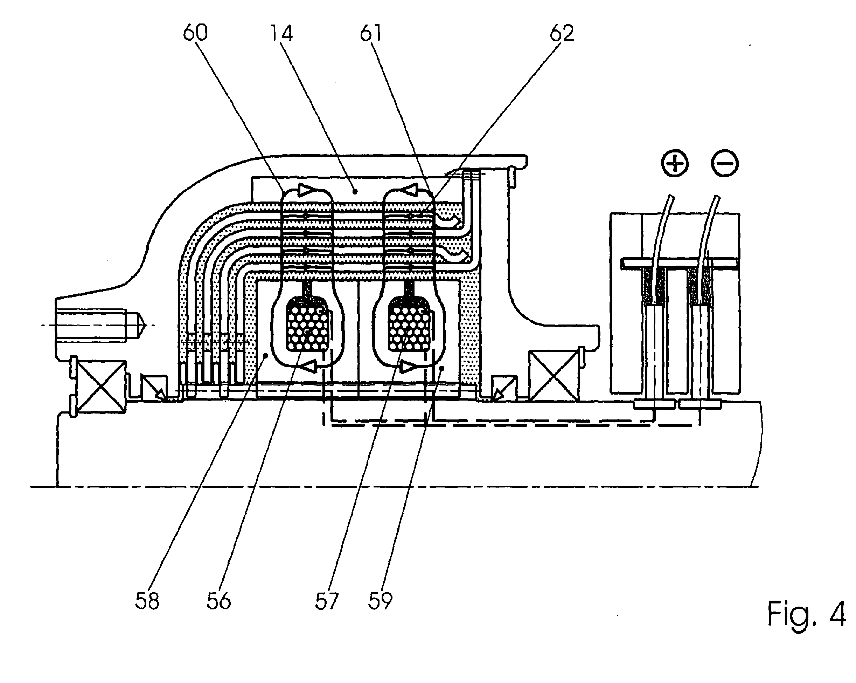

In **Fig. 4** ist die Konstellation der Fig. 3 verdoppelt. Zwei entgegengesetzt gepolte Magnetspulen 56,57 sind nebeneinander angeordnet und jede ist von einem ersten Joch 58, 59 umgeben, das im Wesentlichen dem ersten Joch 51 in Fig. 3 gleicht. Die so erzeugten benachbarten Magnetfelder sind wieder durch je eine Feldlinie 60, 61 angedeutet. Als Besonderheit bestehen hier die Lamellen nicht aus einem Werkstoff hoher magnetischer Permeabilität sondern aus einem Werkstoff mäßiger magnetischer Permeabilität sodass sich schwache Kurzschluss - Feldlinien 62 bilden. Auch so ist eine gleichmäßige Verteilung der magnetischen Feldlinien erreichbar. Die Anzahl der Spulen kann auch erhöht werden, wodurch mehrere kleine magnetische Einzelströme an magnetischen Feldlinien erzeugt werden, was die Bildung von Wirbelströmen minimiert.

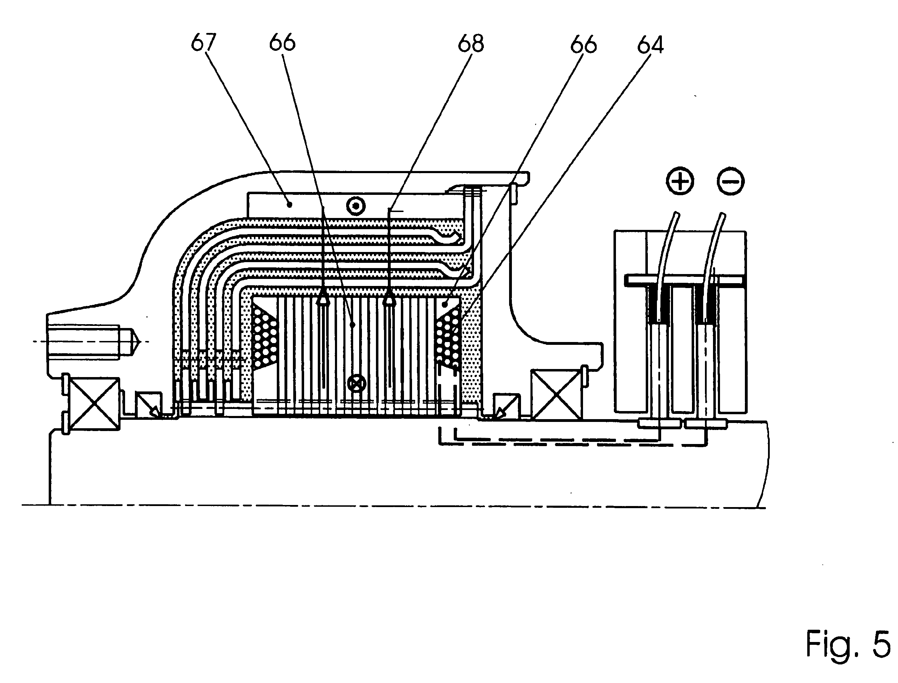

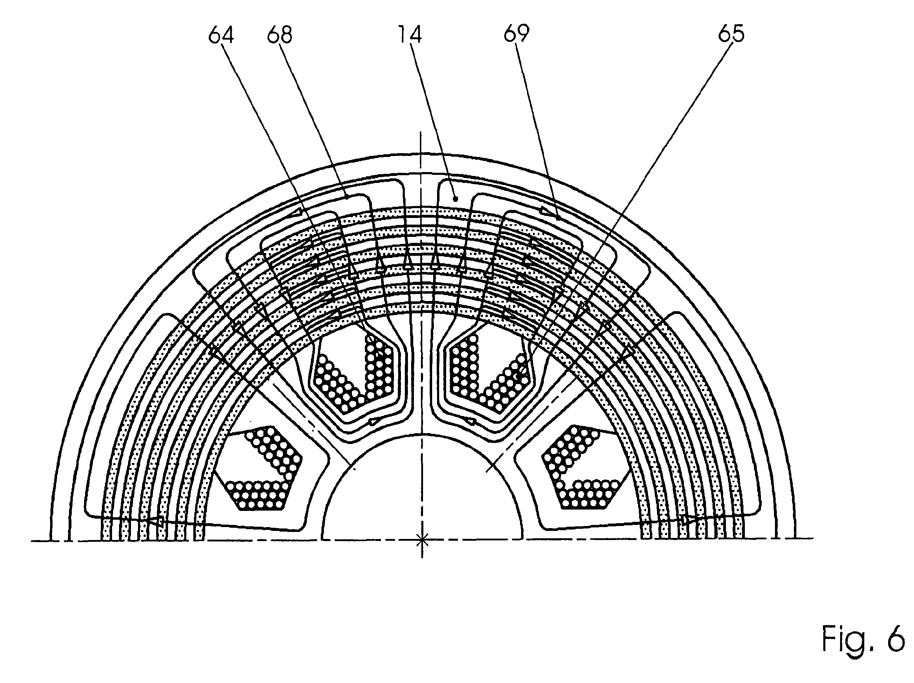

In **Fig. 5** und **Fig. 6** ist eine Anzahl von abwechselnd entgegengesetzt gepolten Magnetspulen 64, 65 in Umfangsrichtung aufeinaderfolgend angeordnet. (siehe Fig. 6). Die entsprechenden Joche 66, 67 sind ebenso über den Umfang des Primärteiles 3 verteilt. Die Feldlinien 68, 69 verlaufen hier wie in Fig. 6 dargestellt.

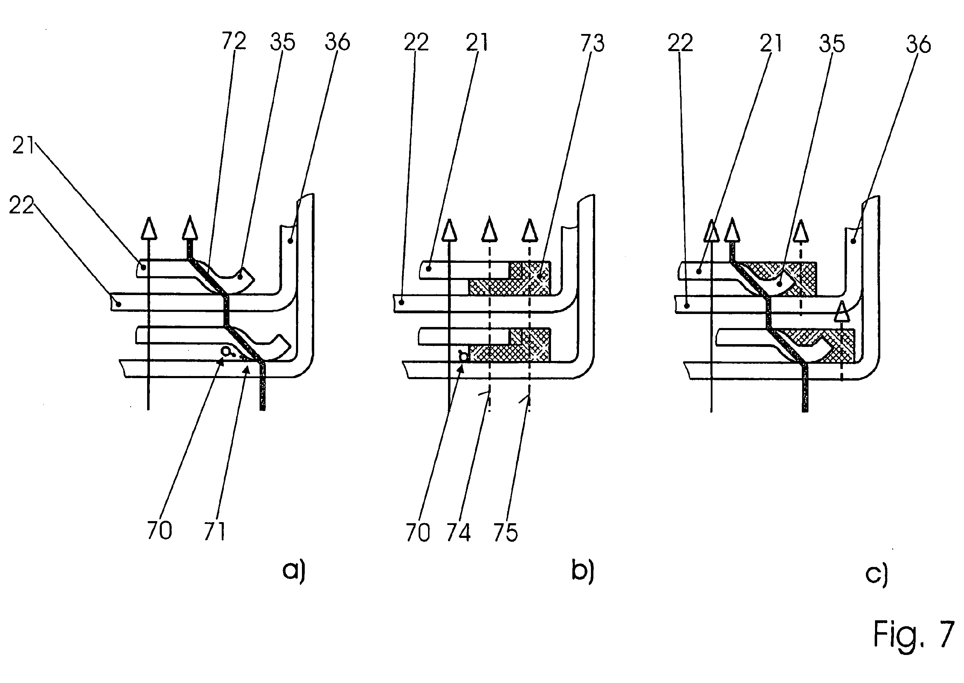

In **Fig. 7** sind die Abdichtungen 34 in 3 Varianten dargestellt. Die Variante a) entspricht der Fig. 1. Die Primärlamellen 21 enden in einem einwärts gebördelten Rand 35, der rundum eine Einschnürung bildet und die darunter liegende Sekundärlamelle 22 berührt - oder angesichts hydrodynamischer Schmiereffekte beinahe berührt. Ein im magnetorheologischen Fluid suspentiertes Partikel ist mit 70 bezeichnet. Es ist angedeutet, dass es, um zum Dichtspalt 71 zu gelangen, gegen die Fliehkraft etwas einwärts wandern müsste, weil die Abdichtung 34 eben durch eine Einschnürung 71 der Primärlamelle und nicht durch eine Ausbeulung einer Sekundärlamelle gebildet ist. Auf diese Weise ist der Durchtritt von Partikeln durch den Dichtspalt 71, und damit eine kaskadierende Entmischung des magnetorheologischen Fluides sicher verhindert. Weiters ist eine Feldlinie 72 eingezeichnet um zu zeigen, dass durch die Berührung von Primärlamellen 21 und Sekundärlamellen 22 eine sammelnde Wirkung auf die Feldlinien ausgeübt wird. In der Variante b) ist anstelle der Einschnürung ein rundum verlaufender Ring 73 aus einem gleitfreundlichen Werkstoff, zum Beispiel einem geeigneten Kunststoff, am Rand der Primärlamellen 21 befestigt. Mit den strichlierten Pfeilen 74 ist angedeutet, dass diese Ringe 73 bei angelegtem Magnetfeld einen Feldgradienten bilden, der die suspendierten Partikel zum stärkeren magnetischen Feld hin und somit von dem Dichtspalt 75 weg treibt. In der Variante c) sind die Varianten a) und b) kombiniert, wodurch sich die Wirkungen der beiden Varianten addieren.

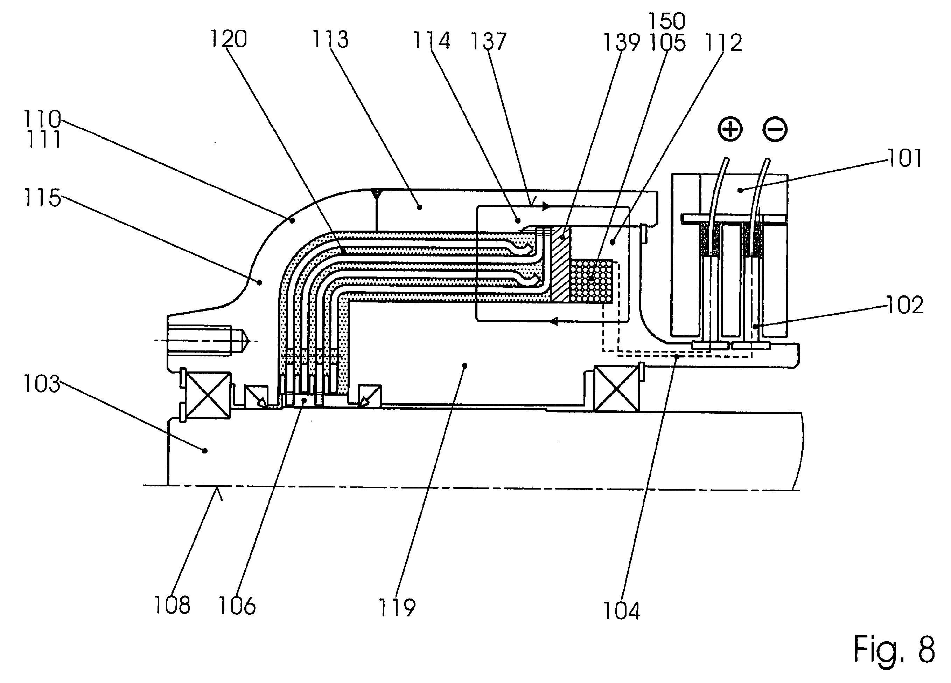

**Fig. 8** unterscheidet sich von der Fig. 1 (bei um 100 erhöhten Bezugszeichen) dadurch, dass der Magnetfelderzeuger 105 mit dem Sekundärteil 110 rotiert. Dem entsprechend sind die am Gehäuse 101 befestigen Schleifkontakte 102 über Leitungen 104 mit dem Magnetfelderzeuger 105, hier einer Spule mit der Wickel-achse 108, leitungsverbunden. Der Sekundärteil 110 hat an der seinem Boden 115 abgewandten Seite einen Deckel 112, der mit einem Einsatz 119 verbunden oder einstückig ist. Der Deckel 112 nimmt den Magnetfelderzeuger 105 auf und bildet zusammen mit dem Einsatz 119 und dem zylindrischen Teil 113 des Sekundärteiles 110 ein Joch, das nur durch den Arbeitsraum 120 unterbrochen ist. Zur Führung der magnetischen Feldlinien 137 ist zwischen dem Magnetfelderzeuger 105 und dem Arbeitsraum 120 ein aus einem Werkstoff geringer magnetischer Permeabilität bestehender Ring 139 eingesetzt.

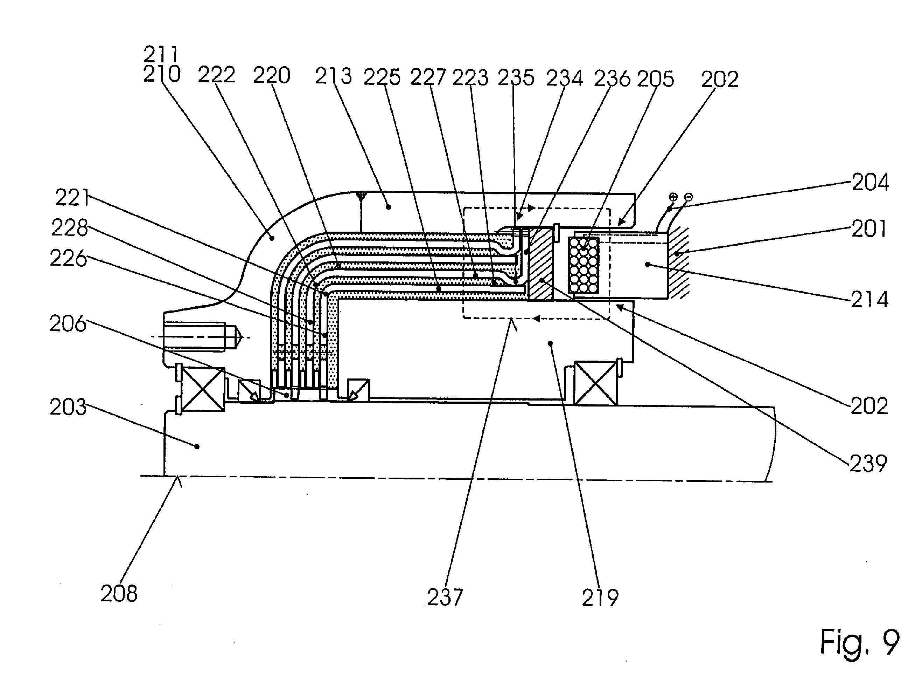

**Fig. 9** unterscheidet sich (bei um 200 erhöhten Bezugszeichen) von der Fig. 1 dadurch, dass der Magnetfelderzeuger 205 mit seinem ersten Joch 214 am Gehäuse 201 angebracht, also stationär ist, und durch eine Abwandlung der Abdichtung 234. Der Sekundärteil 210 hat wieder einen Einsatz 219, der Teil des Sekundärteiles und mit diesem in nicht dargestellter Weise verbunden ist. Einsatz 219 und zylindrischer Teil 213 des Sekundärteiles 210 bilden ein zweites Joch. Die Feldlinien 237 haben hier Luftspalte 202 zu überwinden. Zur Führung der magnetischen Feldlinien 237 ist zwischen dem Magnetfelderzeuger 205 und dem Arbeitsraum 220 ein aus einem Werkstoff geringer magnetischer Permeabilität bestehender Ring 239 eingesetzt.

Die Abwandlung der Abdichtung 234 unterscheidet sich dadurch von der der Fig. 1 dadurch, dass die Einschnürungen 235 hier an den Sekundärlamellen 222 angebracht sind. Deren zylindrischer Teil 227 bildet die Einschnürungen und geht dann direkt in den Flanschteil 236, der zum Beispiel die Form der Krempe eines Hutes hat, über. Auch so können Fluidspalte 223 gebildet werden, die bei kleinstem Radius abgedichtet sind.

## Patentansprüche

1. Magnetorheologische Kupplung, bestehend aus einem Stationärteil (1), einem rotierenden Primärteil (3) mit Primärlamellen und einem koaxial rotierenden Sekundärteil (10) mit Sekundärlamellen, wobei zwischen Primär- und Sekundärteil ein magnetorheologisches Fluid enthaltender Arbeitsraum (20) gebildet ist, in dem sich Primärlamellen und Sekundärlamellen in Radialrichtung aufeinanderfolgend abwechseln, und wobei auf das magnetorheologische Fluid ein regelbares Magnet-feld einwirkt, **dadurch gekennzeichnet, dass**
a) Der Arbeitsraum (20; 120; 220) im Längsschnitt L-förmig ist
b) Der Primärteil (3;103;203) eine Welle und der Sekundärteil (10;110;210) ein den Arbeitsraum (20; 120; 220) aussen umschließender Topf (11; 111;211) ist, der aus einem zylindrischen Teil (13;113;213) und einem Boden (15;115:215) besteht und der zylindrische Teil (13;113;213) ein Joch (14;114;214) enthält beziehungsweise bildet,
c) Die Primärlamellen (21;121;221) und die Sekundärlamellen (22;122:222) topfförmig aus einem zylindrischen Teil (25,27; 125,127; 225,227) und einem Bodenteil (26,28; 126,128; 226,228) bestehen, wobei die zylindrischen Teile (25,27; 125,127; 225,227) zwischen Jochen (14,51; 58,59; 66; 114,112,119; 214, 219,213) in Radialrichtung aufeinanderfolgend abwechseln und die Bodenteile (26,28; 126,128; 226,228) anschließend an den Boden (15;115;215) des Topfes (11;111;211) in Axialrichtung abwechselnd aufeinanderfolgen,
d) wobei die den Bodenteilen (26,28; 126,128; 226,228) abgewandten Zonen der zylindrischen Teile der Lamellen (21,22; 121,122; 221,222) gegenüber benachbarten Lamellen (22,21; 122,121; 222,221) Abdichtungen (34; 134; 234) aufweisen.

2. Magnetorheologische Kupplung nach Anspruch 1, **dadurch gekennzeichnet, dass** die Primärlamellen (21;121;221) mit den inneren Rändern (31; 131; 231) ihrer Bodenteile (26; 126; 226) drehfest mit dem Primärteil (3;103;203) verbunden und durch Abstandhalter (32; 132; 232) voneinander getrennt sind.

3. Magnetorheologische Kupplung nach Anspruch 1, **dadurch gekennzeichnet, dass** die Sekundärlamellen (22; 122; 222) an ihrer den Bodenteilen (28; 128;228) abgewandten Seite hutkrempenartig auswärts gerichtete Flanschteile (36; 136; 236) haben, die in Axialrichtung aneinander anliegend mit dem Sekundärteil (10; 110; 210) verbunden sind.

4. Magnetorheologische Kupplung nach Anspruch 1, **dadurch gekennzeichnet, dass** die Bodenteile (26; 126; 226) der Primärlamellen (21; 121; 221) und/oder Sekundärlamellen (22; 122; 222) in der Nähe der inneren Ränder (31; 131; 231) Durchtrittsöffnungen (33; 133; 233) haben.

5. Magnetorheologische Kupplung nach Anspruch 2, **dadurch gekennzeichnet, dass** die Primärlamellen (21) mit den inneren Rändern (31) ihrer Bodenteile (26) auf einem Zwischenring (40) sitzen, der aus einem Werkstoff geringer magnetischer Permeabilität besteht und seinerseits drehfest mit dem Primärteil (3) verbunden ist.

6. Magnetorheologische Kupplung nach Anspruch 1, **dadurch gekennzeichnet, dass** die den Bodenteilen (26;28; 126;128; 226;228) abgewandten Regionen der zylindrischen Teile (25;27; 125;127; 225;227) der Lamellen (21;22; 121;122; 221; 222) als Abdichtungen (34;234) rundum verlaufende Einschnürungen (35;235) haben, die die nach Innen zu benachbarte Lamelle zumindest beinahe berühren.

7. Magnetorheologische Kupplung nach Anspruch 6, **dadurch gekennzeichnet, dass** die Einschnürungen (35) an den der Primärlamellen (21) ausgebildet sind.

8. Magnetorheologische Kupplung nach Anspruch 1, **dadurch gekennzeichnet, dass** als Abdichtungen (34) an den den Bodenteilen (26) abgewandten Zonen der Lamellen (21;22) Ringe (73) aus einem gleitfreudigen Werkstoff kleiner magnetischer Permeabilität vorgesehen sind.

9. Magnetorheologische Kupplung nach Anspruch 1, **dadurch gekennzeichnet, dass** der Primärteil (3) einen Magnetfelderzeuger (5) mit zumindest einem ersten Joch (51;58,59;66) aufweist und von diesem umgeben ist, welcher Magnetfelderzeuger die innere Begrenzung des Arbeitsraumes (20) bildet, wobei ein zweites Joch in der äusseren Begrenzung des Arbeitsraumes ausgebildet ist und der Topf (11) des Sekundärteiles (10) auf seiner dem Boden (15) abgewandten Seite von einem Deckel verschlossen ist.

10. Magnetorheologische Kupplung nach Anspruch 9, **dadurch gekennzeichnet, dass** der Magnetfelderzeuger (5) eine Spule (50) mit einer mit der Rotationsachse (8) konzentrischen Wickelachse ist und das erste Joch (51) die Spule (50) im Längsschnitt C-förmig umgibt.

11. Magnetorheologische Kupplung nach Anspruch 9, **dadurch gekennzeichnet, dass** der Magnetfelderzeuger (5) aus zwei in axialer Richtung aufeinanderfolgenden Spulen (56,57) mit einer mit der Rotationsachse (8) konzentrischen Wickelachse und zwei in axialer Richtung aufeinanderfolgenden ersten Jochen (58,59) besteht, die die Spulen (56, 57) im Längsschnitt C-förmig umgeben.

12. Magnetorheologische Kupplung nach Anspruch 9, **dadurch gekennzeichnet, dass** der Magnetfelderzeuger (5) aus in Umfangsrichtung in abwechselnder Polung aufeinander folgenden Spulen (64,65) und den zugehörigen ersten Jochen (66,67) besteht.

13. Magnetorheologische Kupplung nach Anspruch 1, **dadurch gekennzeichnet, dass** der Sekundärteil (110) zusätzlich einen den Arbeitsraum (120) innen begrenzenden Einsatzteil (119) aufweist und einen Magnetfelderzeuger (5,105) mit zumindest einem ersten Joch (58,59;66,67;112) enthält.

14. Magnetorheologische Kupplung nach Anspruch 13, **dadurch gekennzeichnet, dass** der Magnetfelderzeuger (105) eine Spule (150) mit einer mit der Rotationsachse (108) konzentrischen Wickelachse ist und das erste Joch (112) die Spule (150) im Längsschnitt C-förmig umgibt.

15. Magnetorheologische Kupplung nach Anspruch 13, **dadurch gekennzeichnet, dass** der Magnetfelderzeuger (5) aus zwei in axialer Richtung aufeinanderfolgenden Spulen (56,57) mit einer mit der Rotationsachse (8) konzentrischen Wickelachse und zwei in axialer Richtung aufeinanderfolgenden ersten Jochen (58,59) besteht, die die Spulen (56,57) im Längsschnitt C-förmig umgeben.

16. Magnetorheologische Kupplung nach Anspruch 13, **dadurch gekennzeichnet, dass** der Magnetfelderzeuger (5) aus in Umfangsrichtung in abwechselnder Polung aufeinander folgenden Spulen (64,65) und den zugehörigen ersten Jochen (66,67) besteht.

17. Magnetorheologische Kupplung nach Anspruch 1, **dadurch gekennzeichnet, dass** ein Magnetfelderzeuger (205) mit seinem ersten Joch (214) mit einem Gehäuse (201) fest verbunden ist und ein Einsatzteil (219) und der zylindrische Teil (213) des Topfes (211) ein zweites Joch bilden.

## Claims

1. A magnetorheological clutch comprising a stationary part (1), a rotating primary part (3) having primary disks and a coaxially rotating secondary part (10) having secondary disks, with a working space (20) containing magnetorheological fluid being formed between the primary part and the secondary part in which the primary disks and secondary disks alternate sequentially in the radial direction and with a regulatable magnetic field acting on the magnetorheological fluid, **characterized in that**
a) the working space (20; 120, 220) is L-shaped in the longitudinal section;
b) the primary part (3; 103; 203) is a shaft and the secondary part (10; 110; 210) is a pot (11; 111; 211) which outwardly surrounds the working space (20; 120; 220) and comprises a cylindrical part (13; 113; 213) and a base (15; 115; 215) and the cylindrical part (13; 113; 213) contains or forms a yoke (14; 114; 214);
c) the primary disks (21; 121; 221) and the secondary disks (22; 122; 222) comprise in pot-form a cylindrical part (25, 27; 125, 127; 225, 227) and a base part (26, 28; 126, 128; 226, 228), with the cylindrical parts (25, 27; 125, 127; 225, 227) sequentially alternating in the radial direction between yokes (14, 51; 58, 59; 66; 114, 112, 119; 214, 219, 213) and the base parts (26, 28; 126, 128; 226, 228) following one another alternately in the axial direction adjoining the base (15; 115; 215) of the pot (11; 111; 211),
d) wherein the zones of the cylindrical parts of the disks (21; 22; 121, 122; 221, 222) remote from the base parts (26, 28; 126, 128; 226, 228) have seals (34; 134; 234) with respect to adjacent disks (22, 21; 122, 121; 222, 221).

2. A magnetorheological clutch in accordance with claim 1,
**characterized in that** the primary disks (21; 121; 221) with the inner rims (31; 131; 231) of their base parts (26; 126; 226) are rotationally fixedly connected to the primary part (3; 103; 203) and are separated from one another by spacers (32; 132; 232).

3. A magnetorheological clutch in accordance with claim 1,
**characterized in that** the secondary disks (22; 122; 222) at their side remote from the base parts (28; 128; 228) have flange parts (36; 136; 236) which are outwardly directed in the manner of a hat brim and which are connected to the secondary part (10; 110; 210) contacting one another in the axial direction.

4. A magnetorheological clutch in accordance with claim 1,
**characterized in that** the base parts (26; 126; 226) of the primary disks (21; 121; 221) and/or secondary disks (22; 122; 222) have passage openings (33; 133; 233) in the proximity of the inner rims (31; 131; 231).

5. A magnetorheological clutch in accordance with claim 2,
**characterized in that** the inner rims (31) of the base parts (26) of the primary disks (21) are seated on an intermediate ring (40) which is made of a material of low magnetic permeability and is in turn rotationally fixedly connected to the primary part (3).

6. A magnetorheological clutch in accordance with claim 1,
**characterized in that** the regions of the cylindrical parts (25; 27; 125; 127; 225; 227) of the disks (21; 22; 121; 122; 221; 222) remote from the base parts (26; 28; 126; 128; 226; 228) have restricted portions (35; 235) which extend all around as seals (34; 234) and which at least almost contact the disk adjacent towards the inside.

7. A magnetorheological clutch in accordance with claim 6,
**characterized in that** the restricted portions (35) are formed at the primary disks (21).

8. A magnetorheological clutch in accordance with claim 1,
**characterized in that** rings (73) of a slide-friendly material of small magnetic permeability are provided as seals (34) on the zones of the disks (21; 22) remote from the base parts (26).

9. A magnetorheological clutch in accordance with claim 1,
**characterized in that** the primary part (3) has a magnetic field generator (5) having at least one first yoke (51; 58; 59; 66) and is surrounded thereby, said magnetic field generator forming the inner boundary of the working space (20), with a second yoke being formed in the outer boundary of the working space and the pot (11) of the secondary part (10) being closed by a cover on its side remote from the base (15).

10. A magnetorheological clutch in accordance with claim 9,
**characterized in that** the magnetic field generator (5) is a coil (50) having a winding axis concentric to the axis of rotation (8) and the first yoke (51) surrounds the coil (50) in C shape in a longitudinal section.

11. A magnetorheological clutch in accordance with claim 9,
**characterized in that** the magnetic field generator (5) comprises two coils (56, 57) sequential in the axial direction and having a winding axis concentric to the axis of rotation (8) and two first yokes (58, 59) which are sequential in the axial direction and which surround the coils (56, 57) in C shape in a longitudinal section.

12. A magnetorheological clutch in accordance with claim 9,
**characterized in that** the magnetic field generator (5) comprises sequential coils (64, 65) in alternating polarity in the peripheral direction and the associated first yokes (66, 67).

13. A magnetorheological clutch in accordance with claim 1,
**characterized in that** the secondary part (110) additionally has an insert part (119) inwardly bounding the working space (120) and contains a magnetic field generator (5, 105) with at least one first yoke (58, 59; 55, 67; 112).

14. A magnetorheological clutch in accordance with claim 13,
**characterized in that** the magnetic field generator (105) is a coil (150) having a winding axis concentric to the axis of rotation (108) and the first yoke (112) surrounds the coil (150) in C shape in a longitudinal section.

15. A magnetorheological clutch in accordance with claim 13,
**characterized in that** the magnetic field generator (5) comprises two coils (56, 57) sequential in the axial direction and having a winding axis concentric to the axis of rotation (8) and two first yokes (58, 59) which are sequential in the axial direction and which surround the coils (56, 57) in C shape in a longitudinal section.

16. A magnetorheological clutch in accordance with claim 13,
**characterized in that** the magnetic field generator (5) comprises sequential coils (64, 65) in alternating polarity in the circumferential direction and the associated first yokes (66, 67).

17. A magnetorheological clutch in accordance with claim 1,
**characterized in that** a first yoke (214) of a magnetic field generator (205) is fixedly connected to a housing (201) and an insert part (219) and a cylindrical part (213) of the pot (211) form a second yoke.

## Revendications

1. Embrayage magnétorhéologique, comprenant une partie stationnaire (1), une partie primaire en rotation (3) avec des lamelles primaires et une partie secondaire en rotation (10) coaxiale avec des lamelles secondaires, dans lequel une chambre de travail (20) qui contient un fluide magnétorhéologique est formée entre la partie primaire et la partie secondaire, chambre dans laquelle des lamelles primaires et des lamelles secondaires alternent en se suivant en direction radiale, et dans lequel un champ magnétique susceptible d'être régulé agit sur le fluide magnétorhéologique, **caractérisé en ce que**
a) la chambre de travail (20 ; 120 ; 220) est en forme de L en coupe longitudinale
b) la partie primaire (3 ; 103 ; 203) est un arbre et la partie secondaire (10 ; 110 ; 210) est un godet (11 ; 111 ; 211) qui entoure à l'extérieur la chambre de travail (20 ; 120 ; 220), godet composé d'une partie cylindrique (13 ; 113 ; 213) et d'un fond (15 ; 115 ; 215), et la partie cylindrique (13 ; 113 ; 213) contient ou forme une culasse (14 ; 114 ; 214),
c) les lamelles primaires (21 ; 121 ; 221) et les lamelles secondaires (22 ; 122 ; 222) sont en forme de godet composé d'une partie cylindrique (25, 27 ; 125, 127 ; 225, 227) et d'une partie de fond (26, 28 ; 126, 128 ; 226, 228), tels que les parties cylindriques (25, 27 ; 125, 127 ; 225, 227) alternent en se suivant en direction radiale entre des culasses (14, 51 ; 58, 59 ; 66 ; 114, 112, 119 ; 214, 219, 213), et les parties de fond (26, 28 ; 126, 128 ; 226, 228) se suivent en alternance en direction axiale et se raccordent au fond (15 ; 115 ; 215) du godet (11; 111 ; 211),
d) dans lequel les zones, détournées des parties de fond (26, 28 ; 126, 128 ; 226, 228), des parties cylindriques des lamelles (21, 22 ; 121, 122 ; 221, 222) comportent des étanchéités (34 ; 134 ; 234) vis-à-vis des lamelles voisines (22, 21 ; 122, 121 ; 222, 221).

2. Embrayage magnétorhéologique selon la revendication 1, **caractérisé en ce que** les lamelles primaires (21 ; 121 ; 221) sont reliées, par les bordures intérieures (31 ; 131 ; 231) de leurs parties de fond (26 ; 126 ; 226), solidairement en rotation avec la partie primaire (3 ; 103 ; 203), et séparées les unes des autres par des écarteurs (32 ; 132 ; 232).

3. Embrayage magnétorhéologique selon la revendication 1, **caractérisé en ce que** les lamelles secondaires (22 ; 122 ; 222) possèdent, sur leur côté détourné des parties de fond (28 ; 128 ; 228), des parties en brides (36 ; 136 ; 236) dirigées vers l'extérieur à la manière d'un rebord de chapeau, qui sont reliées à la partie secondaire (10; 110 ; 210) en étant appliquées les unes contre les autres en direction axiale.

4. Embrayage magnétorhéologique selon la revendication 1, **caractérisé en ce que** les parties de fond (26 ; 126 ; 226) des lamelles primaires (21 ; 121 ; 221) et/ou des lamelles secondaires (22 ; 122 ; 222) possèdent des ouvertures traversantes (33 ; 133 ; 233) au voisinage des bordures intérieures (31 ; 131 ; 231).

5. Embrayage magnétorhéologique selon la revendication 2, **caractérisé en ce que** les lamelles primaires (21) reposent, avec les bordures intérieures (31) de leurs parties de fond (26), sur une bague intermédiaire (40), constituée en un matériau de plus faible perméabilité magnétique et reliée à son tour solidairement en rotation à la partie primaire (3).

6. Embrayage magnétorhéologique selon la revendication 1, **caractérisé en ce que** les régions, détournées des parties de fond (26 ; 28 ; 126 ; 128 ; 226 ; 228), des parties cylindriques (25 ; 27 ; 125 ; 127 ; 225 ; 227) des lamelles (21 ; 22 ; 121 ; 122 ; 221 ; 222) possèdent, à titre d'étanchement (34 ; 234), des rétrécissements (35 ; 235) qui s'étendent sur tout le pourtour vers des lamelles voisines et qui sont au moins presque en contact à l'intérieur.

7. Embrayage magnétorhéologique selon la revendication 6, **caractérisé en ce que** les rétrécissements (35) sont réalisés sur les lamelles primaires (21).

8. Embrayage magnétorhéologique selon la revendication 1, **caractérisé en ce que** des bagues (73) en un matériau favorisant le glissement et présentant une plus faible perméabilité magnétique sont prévues à titre d'étanchement (34) sur les zones des lamelles (21 ; 22) détournées des parties de fond (26).

9. Embrayage magnétorhéologique selon la revendication 1, **caractérisé en ce que** la partie primaire (3) comprend un générateur de champ magnétique (5) avec au moins une première culasse (51 ; 58 ; 59 ; 66) et est entourée par celui-ci, ledit générateur de champ magnétique formant la délimitation intérieure de la chambre de travail (20), dans lequel une seconde culasse est réalisée dans la délimitation extérieure de la chambre de travail, et le godet (11) de la partie secondaire (10) est refermé par un couvercle sur son côté détourné du fond (15).

10. Embrayage magnétorhéologique selon la revendication 9, **caractérisé en ce que** le générateur de champ magnétique (5) est une bobine (50) avec un axe de bobinage concentrique à l'axe de rotation (8), et la première culasse (51) entoure cette bobine (50) en formant un C en coupe longitudinale.

11. Embrayage magnétorhéologique selon la revendication 9, **caractérisé en ce que** le générateur de champ magnétique (5) est composé de deux bobines (56, 57) qui se suivent en direction axiale, avec un axe de bobinage concentrique à l'axe de rotation (8), et de deux premières culasses (58, 59) qui se suivent en direction axiale, qui entourent ces bobines (56, 57) en formant un C en coupe longitudinale.

12. Embrayage magnétorhéologique selon la revendication 9, **caractérisé en ce que** le générateur de champ magnétique (5) est composé de bobines (64, 65) qui se suivent les unes les autres en direction périphérique avec des polarités alternantes, et de premières culasses associées (66, 67).

13. Embrayage magnétorhéologique selon la revendication 1, **caractérisé en ce que** la partie secondaire (110) comprend additionnellement une partie d'insert (119) qui délimite à l'intérieur la chambre de travail (120) et contient un générateur de champ magnétique (5, 105) avec au moins une première culasse (58, 59 ; 66, 67 ; 112).

14. Embrayage magnétorhéologique selon la revendication 13, **caractérisé en ce que** le générateur de champ magnétique (105) est une bobine (150) avec un axe de bobinage concentrique à l'axe de rotation (108), et la première culasse (112) entoure cette bobine (150) en formant un C en coupe longitudinale.

15. Embrayage magnétorhéologique selon la revendication 13, **caractérisé en ce que** le générateur de champ magnétique (5) se compose de deux bobines (56, 57) qui se suivent en direction axiale avec un axe de bobinage concentrique à l'axe de rotation (8), et de deux premières culasses (58, 59) qui se suivent en direction axiale et qui entourent ces bobines (56, 57) en formant un C en coupe longitudinale.

16. Embrayage magnétorhéologique selon la revendication 13, **caractérisé en ce que** le générateur de champ magnétique (5) est composé de bobines (64, 65) qui se suivent les unes les autres en direction périphérique avec des polarités alternantes, et de premières culasses associées (66, 67).

17. Embrayage magnétorhéologique selon la revendication 1, **caractérisé en ce qu'**un générateur de champ magnétique (205) est fermement relié par sa première culasse (214) à un boîtier (201), et une pièce d'insert (219) et la partie cylindrique (213) du godet (211) forment une seconde culasse.
